# EUROPEAN PATENT APPLICATION

(11) **EP 4 787 157 A1**
(43) Date of publication of application: **05.08.2026**
(21) Application number: 24876050.6
(22) Date of filing: 03.06.2024
(51) Int. Cl.: G06F 8/72

(54) **CODE RECOMMENDATION METHOD AND APPARATUS, AND DEVICE AND COMPUTER-READABLE STORAGE MEDIUM**

(30) Priority: 11.10.2023 CN 202311311251; 21.12.2023 CN 202311787695
(71) Applicant: Huawei Cloud Computing Technologies Co., Ltd., Gui'an New District, Guizhou 550025 (CN)
(72) Inventor: ZHOU, Jianyi, Guiyang, Guizhou 550025 (CN); WU, Tianyong, Guiyang, Guizhou 550025 (CN); SHEN, Bo, Guiyang, Guizhou 550025 (CN)
(74) Representative: Körber, Martin Hans
(86) International application number: PCT/CN2024/097117
(87) International publication number: WO 2025/077224

(57) **Abstract**

This application discloses a code recommendation method and apparatus, a device, and a computer-readable storage medium, relating to the field of artificial intelligence technologies. The method includes: obtaining code generation information, where the code generation information is used to describe a programming task of a code; generating at least one candidate code based on the code generation information; determining a to-be-fixed candidate code from the at least one candidate code, where the to-be-fixed candidate code includes an erroneous parameter, and the erroneous parameter does not meet at least one of a syntax constraint or a semantic constraint of a programming language corresponding to the programming task; and fixing the erroneous parameter included in the to-be-fixed candidate code to obtain a fixed candidate code, and recommending the fixed candidate code and an unfixed candidate code in the at least one candidate code, where the unfixed candidate code is different from the to-be-fixed candidate code. After the candidate code is generated, a candidate code having an error is automatically fixed. This improves accuracy of a recommended code.

## Description

This application claims priorities to Chinese Patent Application No. 202311311251.7, filed on October 11, 2023 and entitled "METHOD FOR FIXING MODEL SEMANTIC ERROR, APPARATUS, DEVICE, AND STORAGE MEDIUM", and to Chinese Patent Application No. 202311787695.8, filed on December 21, 2023 and entitled "CODE RECOMMENDATION METHOD AND APPARATUS, DEVICE, AND COMPUTER-READABLE STORAGE MEDIUM", both of which are incorporated herein by reference in their entireties.

### TECHNICAL FIELD

This application relates to the field of artificial intelligence technologies, and in particular, to a code recommendation method and apparatus, a device, and a computer-readable storage medium.

### BACKGROUND

With development of artificial intelligence (artificial intelligence, AI) technologies, AI can be applied in an increasing quantity of application scenarios. A code large language model (code large language model, Code LLM) in the AI field is used as an example. In a project development phase, developers input code requirements related to a project, and the code LLM generates codes based on the input code requirements, and recommends the generated codes to the developers, so that the developers continue to develop the project based on the obtained codes.

### SUMMARY

This application provides a code recommendation method and apparatus, a device, and a computer-readable storage medium, to recommend a code to meet an encoding requirement. Technical solutions are as follows.

According to a first aspect, a code recommendation method is provided. The method includes: obtaining code generation information, where the code generation information is used to describe a programming task of a code; generating at least one candidate code based on the code generation information, where the at least one candidate code meets the programming task described in the code generation information; determining a to-be-fixed candidate code from the at least one candidate code, where the to-be-fixed candidate code includes an erroneous parameter, and the erroneous parameter does not meet at least one of a syntax constraint or a semantic constraint of a programming language corresponding to the programming task; and fixing the erroneous parameter included in the to-be-fixed candidate code to obtain a fixed candidate code, and recommending a code generation result, where the code generation result includes the fixed candidate code and an unfixed candidate code in the at least one candidate code, and the unfixed candidate code is different from the to-be-fixed candidate code.

In this method, after the candidate code is generated, a candidate code having an error in the candidate code, namely, the to-be-fixed candidate code, is automatically fixed. The fixed candidate code and the unfixed code that is different from the to-be-fixed candidate code are provided. The to-be-fixed candidate code is fixed to a code with higher accuracy. This improves the accuracy of the generated code. Because a code used in the programming task is an accurate code, higher accuracy of a code indicates a higher probability of using the code in the programming task. A possibility of using the generated code in the programming task is further increased by improving the accuracy of the generated code.

In a possible implementation, the determining the to-be-fixed candidate code from the at least one candidate code includes: detecting each candidate code in the at least one candidate code, to obtain a detection result for each candidate code; when a detection result for any candidate code in the at least one candidate code indicates that the any candidate code has an error, determining an error type of the any candidate code, to obtain error types of respective candidate codes having errors; and matching the error types of the respective candidate codes having errors with reference types, and determining, based on matching results of the respective candidate codes, the to-be-fixed candidate code from the candidate codes having errors, where the reference type indicates an error type that is supported for fixing. After the candidate code having the error is detected, the error type of the candidate code is further determined, to determine whether the error type of the candidate code can be fixed, so as to avoid invalid work and wastes of resources caused by performing a fixing operation on a candidate code having an error type that cannot be fixed. In addition, the error type can be screened through matching based on the reference type, and a screening process is simple and efficient.

In a possible implementation, the detecting each candidate code in the at least one candidate code includes at least one of the following: for any candidate code, performing syntax parsing on the any candidate code, and determining, based on a parsing result, whether the any candidate code has a syntax error; or running the any candidate code in a compilation environment of the any candidate code, and determining, based on a running result, whether the any candidate code has a running error. In this method, because a manner of detecting the candidate code is not limited, multiple error cases may be detected. For the candidate code including the erroneous parameter, regardless of the syntax error or the running error, different detection methods may be used to detect the error. Flexibility is high, and universality is wide.

In a possible implementation, the determining, based on the matching result of the candidate code, the to-be-fixed candidate code from the candidate codes having errors includes: for any candidate code having an error, when an error type of the any candidate code successfully matches the reference type, determining, based on the error type of the any candidate code, a fixing method corresponding to the any candidate code; and when the fixing method of the any candidate code meets a fixing condition, determining the any candidate code as the to-be-fixed candidate code. The fixing condition is limited, and a candidate code meeting the fixing condition is fixed. This effectively controls a quantity of fixed candidate codes, improves code fixing efficiency, and further shortens waiting time for recommending the code generation result.

In a possible implementation, the reference type includes at least one of an undefined parameter, a code type error, or invoking an undefined method. The error type supporting fixing is not limited in this method, and universality is wide.

In a possible implementation, the fixing the erroneous parameter included in the to-be-fixed candidate code to obtain the fixed candidate code includes: obtaining a reference code corresponding to the to-be-fixed candidate code, where code similarity between the reference code and the to-be-fixed candidate code is greater than a similarity threshold; and matching the reference code with the to-be-fixed candidate code, and selecting, based on a matching result, a parameter from the reference code to replace the erroneous parameter included in the to-be-fixed candidate code, to obtain the fixed candidate code. The candidate code can be fixed by replacing parameters with those from similar reference codes, and a fixing process has low operational complexity and high fixing efficiency.

In a possible implementation, the obtaining the reference code corresponding to the to-be-fixed candidate code includes: obtaining a code knowledge base, where the code knowledge base includes multiple original codes; and retrieving, based on the to-be-fixed candidate code, the reference code from the multiple original codes included in the code knowledge base. The reference code can be obtained through code retrieval in the code knowledge base. An obtaining process is simple, and operation time is short.

In a possible implementation, the obtaining the code knowledge base includes: obtaining the multiple original codes and build information corresponding to the original codes; determining code features of the original codes based on the multiple original codes and the build information of the original codes; determining a correspondence between the original codes based on the code features of the original codes and a usage-impact relationship between the original codes; and building, based on the correspondence between the original codes, the code knowledge base including the multiple original codes. The original codes are stored based on the correspondence between the original codes. In a subsequent code retrieval process, a similar code may be quickly located based on the built correspondence. This improves code retrieval efficiency.

In a possible implementation, the recommending the code generation result includes: determining a code fixing location corresponding to the fixed candidate code, and identifying the code fixing location; and recommending the identified fixed candidate code and the unfixed candidate code. The code fixing location is identified, so that a fixing status of the candidate code can be quickly learned, and whether the fixed candidate code meets a code generation requirement can be determined based on the fixing status. This improves efficiency of determining the candidate code.

In a possible implementation, after the recommending the code generation result, the method further includes: obtaining at least one error fixing method corresponding to the fixed candidate code; and recommending the at least one error fixing method corresponding to the fixed candidate code, where the at least one error fixing method is used to assist in correcting the to-be-fixed candidate code corresponding to the fixed candidate code. The at least one error fixing method is recommended for selection, to assist in correcting the to-be-fixed candidate code. This shortens correction time of the candidate code, and improves efficiency.

In a possible implementation, the erroneous parameter is fixed based on the reference code, and before the fixing the erroneous parameter included in the to-be-fixed candidate code, the method further includes: obtaining a modified code obtained by modifying a recommended first code, where the first code is obtained by fixing a second code before recommendation; and extracting a modification feature of the modified code, and updating the second code based on the extracted modification feature to obtain the reference code. The second code for modifying the first code is updated based on a modification status of the first code, so that the obtained reference code is more suitable for the programming task, and the candidate code obtained through fixing based on the reference code is more suitable for the programming task.

According to a second aspect, a code recommendation apparatus is provided. The apparatus includes: an obtaining module, configured to obtain code generation information, where the code generation information is used to describe a programming task of a code; a generation module, configured to generate at least one candidate code based on the code generation information, where the at least one candidate code meets the programming task described in the code generation information; a determining module, configured to determine a to-be-fixed candidate code from the at least one candidate code, where the to-be-fixed candidate code includes an erroneous parameter, and the erroneous parameter does not meet at least one of a syntax constraint or a semantic constraint of a programming language corresponding to the programming task; and a recommendation module, configured to: fix the erroneous parameter included in the to-be-fixed candidate code to obtain a fixed candidate code, and recommend a code generation result, where the code generation result includes the fixed candidate code and an unfixed candidate code in the at least one candidate code, and the unfixed candidate code is different from the to-be-fixed candidate code.

In a possible implementation, the determining module is configured to: detect each candidate code in the at least one candidate code, to obtain a detection result for each candidate code; when a detection result for any candidate code in the at least one candidate code indicates that the any candidate code has an error, determine an error type of the any candidate code, to obtain error types of respective candidate codes having errors; and match the error types of the respective candidate codes having errors with reference types, and determine, based on matching results of the respective candidate codes, the to-be-fixed candidate code from the candidate codes having errors, where the reference type indicates an error type that is supported for fixing.

In a possible implementation, the determining module is configured to perform at least one of the following: for any candidate code, performing syntax parsing on the any candidate code, and determining, based on a parsing result, whether the any candidate code has a syntax error; or running the any candidate code in a compilation environment of the any candidate code, and determining, based on a running result, whether the any candidate code has a running error.

In a possible implementation, the determining module is configured to: for any candidate code having an error, when an error type of the any candidate code successfully matches the reference type, determine, based on the error type of the any candidate code, a fixing method corresponding to the any candidate code; and when the fixing method of the any candidate code meets a fixing condition, determine the any candidate code as the to-be-fixed candidate code.

In a possible implementation, the reference type includes at least one of an undefined parameter, a code type error, or invoking an undefined method.

In a possible implementation, the recommendation module is configured to: obtain a reference code corresponding to the to-be-fixed candidate code, where code similarity between the reference code and the to-be-fixed candidate code is greater than a similarity threshold; and match the reference code with the to-be-fixed candidate code, and select, based on a matching result, a parameter from the reference code to replace the erroneous parameter included in the to-be-fixed candidate code, to obtain the fixed candidate code.

In a possible implementation, the recommendation module is configured to: obtain a code knowledge base, where the code knowledge base includes multiple original codes; and retrieve, based on the to-be-fixed candidate code, the reference code from the multiple original codes included in the code knowledge base.

In a possible implementation, the recommendation module is configured to: obtain the multiple original codes and build information corresponding to the original codes; determine code features of the original codes based on the multiple original codes and the build information of the original codes; determine a correspondence between the original codes based on the code features of the original codes and a usage-impact relationship between the original codes; and build, based on the correspondence between the original codes, the code knowledge base including the multiple original codes.

In a possible implementation, the recommendation module is configured to: determine a code fixing location corresponding to the fixed candidate code, and identify the code fixing location; and recommend the identified fixed candidate code and the unfixed candidate code.

In a possible implementation, the obtaining module is further configured to obtain at least one error fixing method corresponding to the fixed candidate code; and the recommendation module is further configured to recommend the at least one error fixing method corresponding to the fixed candidate code, where the at least one error fixing method is used to assist in correcting the to-be-fixed candidate code corresponding to the fixed candidate code.

In a possible implementation, the erroneous parameter is fixed based on the reference code; the obtaining module is further configured to obtain a modified code obtained by modifying a recommended first code, where the first code is obtained by fixing a second code before recommendation; and the apparatus further includes an update module, configured to: extract a modification feature of the modified code, and update the second code based on the extracted modification feature to obtain the reference code.

According to a third aspect, a computing device cluster is provided. The computing device cluster includes at least one computing device, and each computing device includes a processor and a memory. The processor of the at least one computing device is configured to execute instructions stored in the memory of the at least one computing device, to cause the computing device cluster to perform any code recommendation method according to the first aspect.

According to a fourth aspect, a computer-readable storage medium is provided. The computer-readable storage medium includes computer program instructions. When the computer program instructions are executed by a computing device cluster, the computing device cluster performs any code recommendation method according to the first aspect.

According to a fifth aspect, a computer program (product) including instructions is provided. When the instructions are run by a computing device cluster, the computing device cluster is caused to perform code recommendation method according to the first aspect.

According to a sixth aspect, a communication apparatus is provided. The apparatus includes a transceiver, a memory, and a processor. The transceiver, the memory, and the processor communicate with each other through an internal connection path. The memory is configured to store instructions. The processor is configured to execute the instructions stored in the memory, to control the transceiver to receive a signal, and control the transceiver to send a signal. In addition, when the processor executes the instructions stored in the memory, the processor is caused to perform the method according to any one of the first aspect or the possible implementations of the first aspect.

Optionally, there are one or more processors, and there are one or more memories.

Optionally, the memory and the processor may be integrated together, or the memory and the processor may be separately disposed.

During specific implementation, the memory may be a non-transitory (non-transitory) memory, for example, a read-only memory (read-only memory, ROM). The memory and the processor may be integrated on a same chip, or may be separately disposed on different chips. A type of the memory and a manner of disposing the memory and the processor are not limited in this application.

According to a seventh aspect, a chip is provided, and includes a processor, configured to: invoke, from a memory, instructions stored in the memory, and run the instructions, to cause a communication device on which the chip is mounted to perform the method according to the foregoing aspects.

According to an eighth aspect, another chip is provided, and includes an input interface, an output interface, a processor, and a memory. The input interface, the output interface, the processor, and the memory are connected through an internal connection path. The processor is configured to execute a code in the memory. When the code is executed, the processor is configured to perform the method according to the foregoing aspects.

It should be understood that, for beneficial effects achieved by the technical solutions of the second aspect to the eighth aspect of this application and the possible implementations corresponding to the second aspect to the eighth aspect, refer to the technical effects of the first aspect and the possible implementations corresponding to the first aspect. Details are not described herein again.

### BRIEF DESCRIPTION OF DRAWINGS

FIG. 1 is a diagram of an implementation environment according to an embodiment of this application;
FIG. 2 is a flowchart of a code recommendation method according to an embodiment of this application;
FIG. 3(1) to FIG. 3(3) are diagrams of pages according to an embodiment of this application;
FIG. 4 is a statistical chart of code errors according to an embodiment of this application;
FIG. 5 is a diagram of a code generation process according to an embodiment of this application;
FIG. 6 is a diagram of another code generation process according to an embodiment of this application;
FIG. 7 is a diagram of another page according to an embodiment of this application;
FIG. 8 is a diagram of a structure of a code recommendation apparatus according to an embodiment of this application;
FIG. 9 is a diagram of a structure of a computing device according to an embodiment of this application; and
FIG. 10 is a diagram of connections of a computing device according to an embodiment of this application.

### DESCRIPTION OF EMBODIMENTS

Terms used in implementations of this application are only used to explain specific embodiments of this application, but are not intended to limit this application. To make objectives, technical solutions, and advantages of this application clearer, the following further describes implementations of this application in detail with reference to accompanying drawings.

With development of artificial intelligence technologies, codes may be generated and recommended by using increasingly mature code generation technologies, to improve programming efficiency. For example, codes re generated based on input code generation information by using a code large language model, and the generated codes are recommended. The code large language model, which is a large neural network model used in the natural language processing (natural language processing, NLP) and computer program generation fields, is typically based on deep learning technologies, and has millions to billions of parameters. The code generation information input into the code large language model may be texts. In this case, based on the input texts, the code large language model infers a program code or generates a specific code segment.

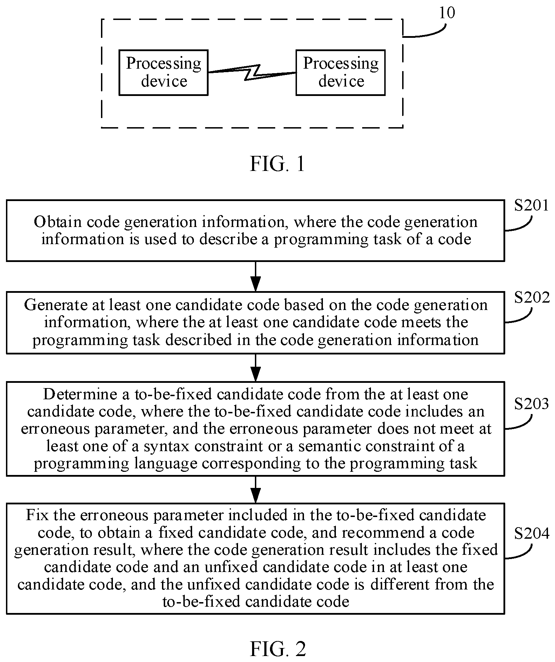

An embodiment of this application provides a code recommendation method, to recommend a code to complete a programming task. FIG. 1 is a diagram of an implementation environment of a code recommendation method according to an embodiment of this application. The implementation environment is a computing device cluster 10. The computing device cluster 10 includes at least one processing device configured to provide a cloud service. When there are multiple processing devices, the processing devices may be communicatively connected to each other in a wired or wireless network manner. Optionally, the code recommendation method may be independently performed by one processing device. For example, the processing device obtains code generation information, generates at least one candidate code based on the code generation information, fixes a to-be-fixed candidate code that has an error in the candidate code, to obtain a fixed candidate code, uses the fixed candidate code and an unfixed candidate code that is different from the to-be-fixed candidate code from the at least one candidate code as a code generation result, and recommends the code generation result. The foregoing code recommendation process may alternatively be performed by multiple processing devices included in the computing device cluster 10 through interaction. A quantity of processing devices included in the computing device cluster 10 is not limited in this embodiment of this application. In FIG. 1, only two processing devices are used as an example for description.

For example, the processing device included in the computing device cluster 10 may be a server, for example, a central server, an edge server, or a local server in a local data center. The server may be a physical server, or may be a cloud server that provides a cloud computing service. In some embodiments, the processing device included in the computing device cluster 10 may alternatively be a terminal device like a desktop computer, a notebook computer, or a smartphone involved in the cloud service.

An embodiment of this application provides a code recommendation method. The code recommendation method may be applied to the implementation environment shown in FIG. 1. The method may be performed by the processing device included in the computing device cluster 10. A flowchart of the method is shown in FIG. 2, and S201 to S204 are included.

S201: Obtain code generation information, where the code generation information is used to describe a programming task of a code.

In this embodiment of this application, a scenario in which the programming task is determined is not limited, and a process in which the processing device obtains the code generation information based on the programming task is not limited. In a possible implementation, the programming task may be determined in a project development process. For example, because running of a target project depends on a code, in a process of developing the target project, there is a programming task in which a code of the target project needs to be written, and the processing device obtains the code generation information based on the development of the target project. The target project is any project that has a development requirement, for example, video playing or image cropping. Optionally, the programming task may alternatively be determined in a code detection process. For example, the processing device detects an obtained code, and finds that the obtained code includes a fault code that needs to be re-written. Therefore, the processing device determines that the programming task is to write a code having a same function as the fault code, and obtains the code generation information based on the programming task.

In addition to determining the code generation information based on the detected programming task as shown in the foregoing embodiment, the processing device may alternatively obtain the code generation information based on interaction with a code user. For example, the user is an object that develops the target project, and the user determines, based on a development requirement of the developed target project, a code that needs to be written, determines the code generation information, and sends the code generation information to the processing device based on interaction with the processing device. The processing device may be a terminal of the user, or may be a device that establishes a communication connection to the terminal of the user.

When the processing device is the terminal of the user, the terminal provides an information input control, the user inputs the code generation information by using the information input control, and the terminal obtains the code generation information. A manner in which the terminal provides the information input control is not limited in this embodiment of this application. The information input control may be provided by using a local code editor of the terminal, for example, a software developer tool (visual studio code, VSCode), an integrated development environment (integrated development environment, IDE) plug-in, an automatic code generation tool, a source-end code editor, or an auxiliary program of a cloud development environment. In a possible implementation, the terminal may alternatively provide a code generation service in a form of an application programming interface (application programming interface, API) structure by using a cloud service, and provide the information input control for the user.

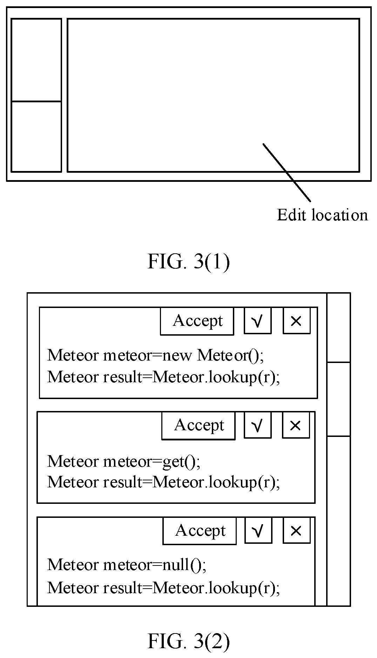

FIG. 3(1) to FIG. 3(3) are diagrams of page displays according to an embodiment of this application. FIG. 3(1) to FIG. 3(3) show IDE interfaces displayed by the terminal to the user when the IDE plug-in is used for project development. FIG. 3(1) is an initial page. In a use phase, the user may perform right-clicking at an edit location, select "Generate Code", and input code generation information in an information input control provided at the edit location.

The code generation information is not limited in this embodiment of this application. The code generation information may be any information that can describe the programming task. The code generation information may be a natural language text that describes a code function. For example, if a posture is estimated based on an acceleration and an angular velocity that are obtained through measurement, the programming task is to write a posture estimation function for calculating the posture based on the acceleration and the angular velocity. The code generation information is generating the posture estimation function, and input parameters of the function are the acceleration and the angular velocity, and an output parameter of the function is the posture. Alternatively, if searching is performed by using a website A, and a page of a search result is displayed, the programming task is to write a code for invoking the website A to perform searching and display the page, the code generation information is generating a search code, an input parameter of the search code is a website name, and an output parameter of the search code is a parameter for rendering a website page. The code generation information may alternatively be a code context that requires code connection, or a code execution log, a requirement document, a comment, or the like.

In a possible case, when the processing device is the device connected to the terminal, the processing device receives the code generation information sent by the terminal. For example, the processing device is an integrated data processing center including multiple servers, and data processing efficiency of the data processing center is higher than that of a single terminal. Therefore, after receiving the code generation information input by the user, the terminal sends the code generation information to the data processing center based on the communication connection with the data processing center, so that the code is generated more quickly via the data processing center, and the data processing center serving as the processing device obtains the code generation information.

S202: Generate at least one candidate code based on the code generation information, where the at least one candidate code meets the programming task described in the code generation information.

For example, after obtaining the code generation information and determining the programming task, the processing device may generate the candidate code based on the code generation information by using any code generation model, to complete the programming task. The code generation model may be a code large model, for example, an encoder-decoder (encoder-decoder) model that is based on a sequence model (Transformer) architecture and that depends on an attention mechanism, a generative pre-trained transformer (generative pre-trained transformer, GPT) model, a language model (StarCoder) trained on a source code and a natural language text, a large language model (WizardCoder) oriented to programming, or a large language model (Code Llama) that can generate a code by using a text prompt.

Optionally, when the code generation information is the natural language text described in the example in S201, the processing device first performs language understanding on the natural language text, and converts the natural language text into an intermediate representation that can be understood by a machine. For example, the natural language text is encoded by using a bidirectional encoder representations from transformers (bidirectional encoder representations from transformers, BERT) model, the GPT model, or the like, and an encoded result is used as the intermediate representation. Then, a corresponding code structure and syntax are generated based on the intermediate representation by using the code large language model, to obtain the candidate code.

In a possible case, the processing device may generate multiple candidate codes in a process of generating the candidate code based on the code generation information. The example in which the code generation information is the natural language text in the foregoing embodiment is still used. The processing device obtains different intermediate representations when encoding a same natural language text in different manners. In this case, the code large language model may generate different understandings based on the different intermediate representations, to generate candidate codes whose code structures or syntaxes are different. However, regardless of a case of the candidate code generated by the processing device, any candidate code meets the programming task described in the code generation information. For example, the candidate code may implement the function described in the code generation information, or may be connected to the input code context to implement code loading.

S203: Select a to-be-fixed candidate code from the at least one candidate code, where the to-be-fixed candidate code includes an erroneous parameter, and the erroneous parameter does not meet at least one of a syntax constraint or a semantic constraint of a programming language corresponding to the programming task.

In one possible case, the candidate code generated by the processing device may have an error. For example, because a deep learning model does not master at least one of the syntax constraint or the semantic constraint of the programming language, the erroneous parameter that does not meet the at least one of the syntax constraint or the semantic constraint is generated. The programming language is a language corresponding to the programming task. When the programming task is the code in the target project, the programming language is a computer language used to develop the target project. The syntax constraint refers to a rule and a structure that need to be followed in a code writing process, and indicates a symbol, a keyword, an operator, and the like that should be used during code writing, and an organization manner and a nesting relationship of the symbol, the keyword, the operator, and the like in the code. The semantic constraint refers to an actual meaning and an execution result of the code, describes logic and a function that are expressed during code running, and specifies an interaction mode and behavior of different elements in the code and an execution result of a response.

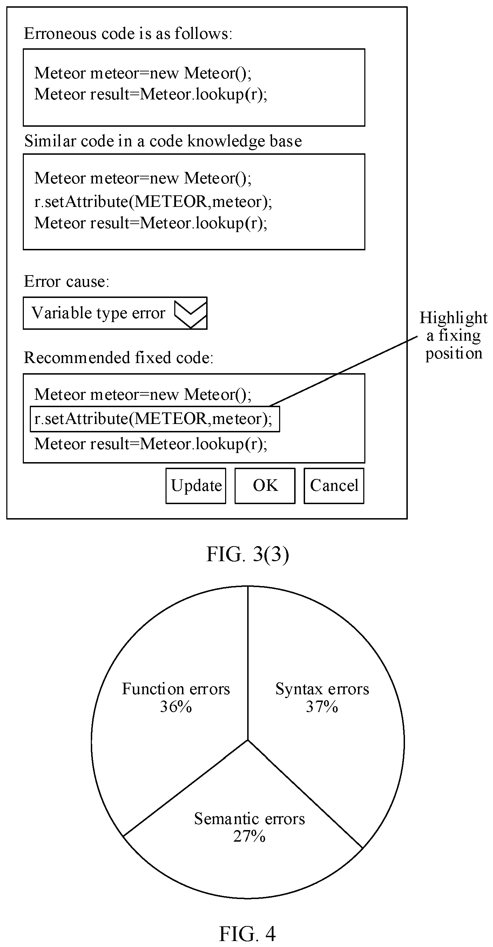

For example, a code error caused by the erroneous parameter in the candidate code includes but is not limited to a syntax error, a semantic error, and a function error. The syntax error refers to an error that appears in a compilation process and that is of the candidate code including a statement that does not comply with a syntax specification. An erroneous parameter in the syntax error is, for example, a parameter with an incorrect uppercase or lowercase letter, or a punctuation mark that is not an English symbol. The function error refers to an error that may occur in a program during running of the candidate code and an error that appears in a running process. An erroneous parameter in the function error is, for example, a parameter whose subscript is out of range and a parameter whose stack overflows. The semantic error refers to a logic error. Although no error is reported during compilation and no exception is thrown in the running process, an output result is incorrect. An erroneous parameter in the semantic error is, for example, a formula parameter that is incorrectly written, or a condition parameter that is incorrectly written in a condition statement in the candidate code. FIG. 4 is a statistical chart of code errors according to an embodiment of this application. Refer to FIG. 4. 305 code snippets generated by two code large models are analyzed. In quantities of error types of the generated 305 code snippets, function errors account for 36%, syntax errors account for 37%, and semantic errors account for 27%.

When the candidate code has the error, after generating the candidate code, the processing device further needs to fix the candidate code, to correct the error in the candidate code, so as to provide a code with a higher accuracy rate. In a possible implementation, a process in which the processing device selects the to-be-fixed candidate code includes: detecting each candidate code in the at least one candidate code, to obtain a detection result for each candidate code; when a detection result for any candidate code in the at least one candidate code indicates that the any candidate code has an error, determining an error type of the any candidate code, to obtain error types of respective candidate codes having errors; and matching the error types of the respective candidate codes having errors with reference types, and determining, based on matching results of the respective candidate codes, the to-be-fixed candidate code from the candidate codes having errors, where the reference type indicates an error type supported by the processing device for fixing.

A process in which the processing device detects the candidate code is not limited in this embodiment of this application. Any candidate code is used as an example, and may be detected in optional manners, including but not limited to the following two optional manners. In an optional manner 1, the processing device performs syntax parsing on the any candidate code, and determines, based on a parsing result, whether the any candidate code has a syntax error. For example, the processing device obtains a syntax rule. The syntax rule may be a syntax constraint that needs to be followed during code writing and that is determined based on experience or an implementation environment. The implementation environment is, for example, the target project to which the code is applied. Then, the processing device analyzes and parses the any candidate code according to the syntax rule, to determine whether the candidate code meets the syntax rule. The foregoing analysis and parsing may be performed by using a context-independent grammar (context-free grammar, CFG) represented by the syntax rule. When the candidate code meets the syntax rule, it indicates that the any candidate code has no syntax error. For example, when the candidate code does not meet the syntax rule, it indicates that the any candidate code has a syntax error.

In an optional manner 2, the processing device runs the any candidate code in a compilation environment of the any candidate code, and determines, based on a running result, whether the any candidate code has a running error. The compilation environment of the candidate code may be built by the processing device, or may be obtained in another manner. That there is no running error means that no error appears in a running process of the candidate code, and the running result is correct. That there is a running error includes at least one of an error appearing in the running process or an incorrect running result. The any candidate code is run in the compilation environment, whether the any candidate code has a function error is determined based on whether an error appears in the running process, and whether the any candidate code has a semantic error is determined based on whether the running result is correct. The processing device may select either the optional manner 1 or the optional manner 2 to detect the candidate code. For example, when a semantic error of a candidate code needs to be fixed, the processing device selects the optional manner 2 to detect the candidate code, to determine the candidate code having the semantic error. Alternatively, the processing device may select the optional manner 1 and the optional manner 2 to detect the candidate code, to implement comprehensive detection on the candidate code.

After determining, based on the detection result, the candidate code having the error, the processing device may further determine an error type of the candidate code. For example, the processing device obtains a usage relationship defined based on the candidate code. If one parameter is used but not defined, the parameter is determined as an undefined parameter, and therefore the error type of the candidate code is determined as the undefined parameter. After determining the error type of the any candidate code, the processing device may perform matching based on the error type and the reference type, to determine whether the processing device currently supports fixing of the error type. The reference type may be set based on experience. For example, before using the processing device to generate the code, the user defines some error types that can be fixed as reference types. The reference type may be a common error type in a code generated by the deep learning model. For example, the processing device is configured to fix a semantic type. In this case, the reference type may be the semantic type, and includes but is not limited to at least one of the undefined parameter, a code type error, or invoking an undefined method. The code type error may be that a quantity of parameters/the parameter type does not match, and the undefined method may be, for example, an undeclared API.

For example, the processing device matches the error type with the reference type. When the error type is any error type included in the reference type, it is determined that the error type successfully matches the reference type. The processing device may match the error type with the reference type by defining the error type included in the semantic error, as described above. The processing device may further determine a category to which the error type belongs. When the category is the reference type, it is determined that the error type successfully matches the reference type. The example in which the reference type is the semantic error is still used. In a process of detecting the candidate code, the processing device determines the error type of the candidate code as the undefined parameter. Because a category of the undefined parameter is a semantic error, that is, both the category and the reference type indicate the semantic error, the processing device determines that the error type of the candidate code successfully matches the reference type.

Optionally, when the error type of the candidate code successfully matches the reference type, the processing device may directly determine the candidate code as the to-be-fixed candidate code, and fix the candidate code. In a possible case, when the error type of the any candidate code having the error successfully matches the reference type, the processing device may further determine, based on the error type of the any candidate code, a fixing method corresponding to the any candidate code; and when the fixing method of the any candidate code meets a fixing condition, determine the any candidate code as the to-be-fixed candidate code.

In a possible case, the fixing condition is determined based on a fixing method used by the processing device. In a process of fixing the candidate code, the processing device searches a code knowledge base for a similar code. Therefore, the processing device may determine the fixing condition as whether to invoke the code knowledge base, or determine the fixing condition as whether the similar code is needed. When the processing device fixes the candidate code by using another fixing method, the processing device may further flexibly set a fixing condition based on the used fixing method. Optionally, the processing device determines, based on the error type of the any candidate code, the fixing method corresponding to the error type, for example, determines, based on the error type of the any candidate code, at least one of a code segment needing to be modified and error logic needing to be corrected, and determines, based on the at least one of the determined code segment and the determined error logic, whether the code knowledge base needs to be invoked. When the fixing method indicates that the code knowledge base needs to be invoked, it is determined that the candidate code meets the fixing condition, that is, the candidate code is the to-be-fixed candidate code. On the contrary, when the fixing method indicates that the code knowledge base does not need to be invoked, it is determined that the candidate code does not meet the fixing condition, and the candidate code does not need to be fixed.

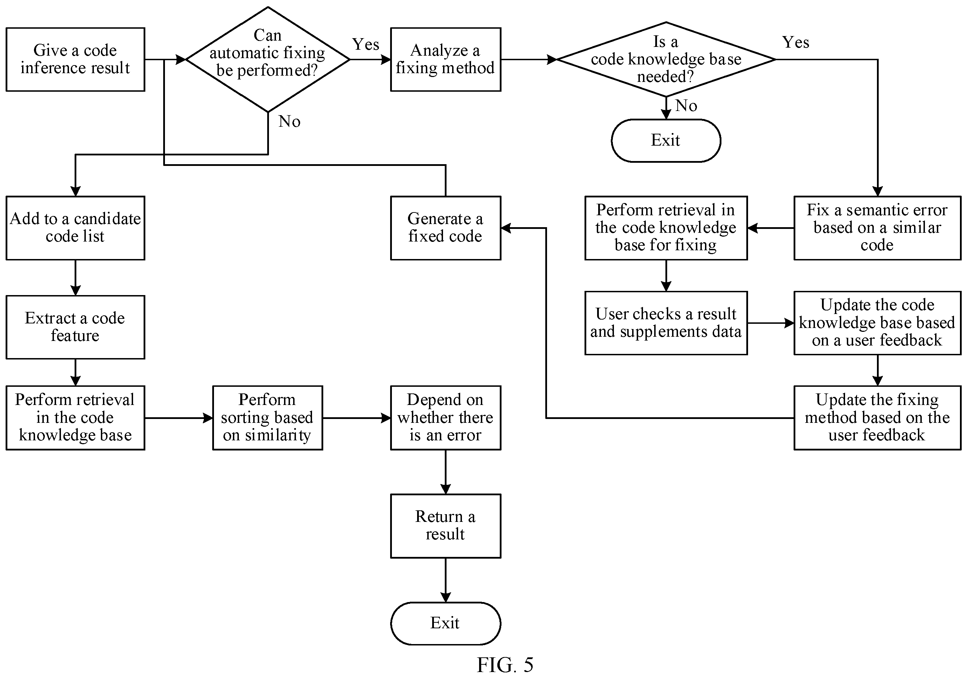

For example, as shown in FIG. 5, after giving a code inference result, namely, the generated at least one candidate code, based on the code generation information, the processing device determines, based on the error type of the any candidate code, whether the processing device can perform automatic fixing. When the processing device can perform automatic fixing, the processing device analyzes the fixing method; determines whether the code knowledge base is needed; and triggers exit when the code knowledge base is not needed, and ends fixing of the candidate code; or determines that the candidate code needs to be fixed when the code knowledge base is needed.

S204: Fix the erroneous parameter included in the to-be-fixed candidate code, to obtain a fixed candidate code, and recommend a code generation result, where the code generation result includes the fixed candidate code and an unfixed candidate code in at least one candidate code, and the unfixed candidate code is different from the to-be-fixed candidate code.

Regardless of a manner in which the processing device determines the to-be-fixed candidate code from the at least one candidate code, the processing device can fix the to-be-fixed candidate code. For example, the processing device obtains a reference code corresponding to the to-be-fixed candidate code, where code similarity between the reference code and the to-be-fixed candidate code is greater than a similarity threshold; and matches the reference code with the to-be-fixed candidate code, and selects, based on a matching result, a parameter from the reference code to replace the parameter of the to-be-fixed candidate code, to obtain the fixed candidate code. In a possible case, the reference code that is highly similar to the to-be-fixed candidate code may also be referred to as a similar code. In this case, a fixing process based on the similar code may be referred to as fixing a semantic error based on the similar code, as shown in FIG. 5.

The code similarity includes semantic similarity and structure similarity. The semantic similarity refers to similarity between functions and meanings of the reference code and the to-be-fixed candidate code. The structure similarity refers to similarity between structures and forms of the reference code and the to-be-fixed candidate code. The similarity threshold may be set based on the experience and the implementation environment. When the code similarity includes the semantic similarity and the structure similarity, both the semantic similarity and the structure similarity between the reference code and the to-be-fixed candidate code are greater than corresponding similarity thresholds. In addition, the similarity threshold corresponding to the semantic similarity may be the same as or different from the similarity threshold corresponding to the structure similarity.

In a possible implementation, the processing device may determine, based on the code knowledge base, the reference code similar to the to-be-fixed candidate code, that is, perform retrieval in the code knowledge base to obtain the reference code for fixing, as shown in FIG. 5. For example, the processing device obtains the code knowledge base, where the code knowledge base includes multiple original codes; and retrieves, based on the to-be-fixed candidate code, the reference code from the multiple original codes included in the code knowledge base. The code knowledge base may be an existing knowledge base including a large quantity of original codes, or may be a code knowledge base that is currently built by the processing device.

A process in which the processing device builds the code knowledge base includes but is not limited to: obtaining the multiple original codes and build information corresponding to the original codes; determining code features of the original codes based on the multiple original codes and the build information of the original codes; determining a correspondence between the original codes based on the code features of the original codes and a usage-impact relationship between the original codes; and building, based on the correspondence between the original codes, the code knowledge base including the multiple original codes.

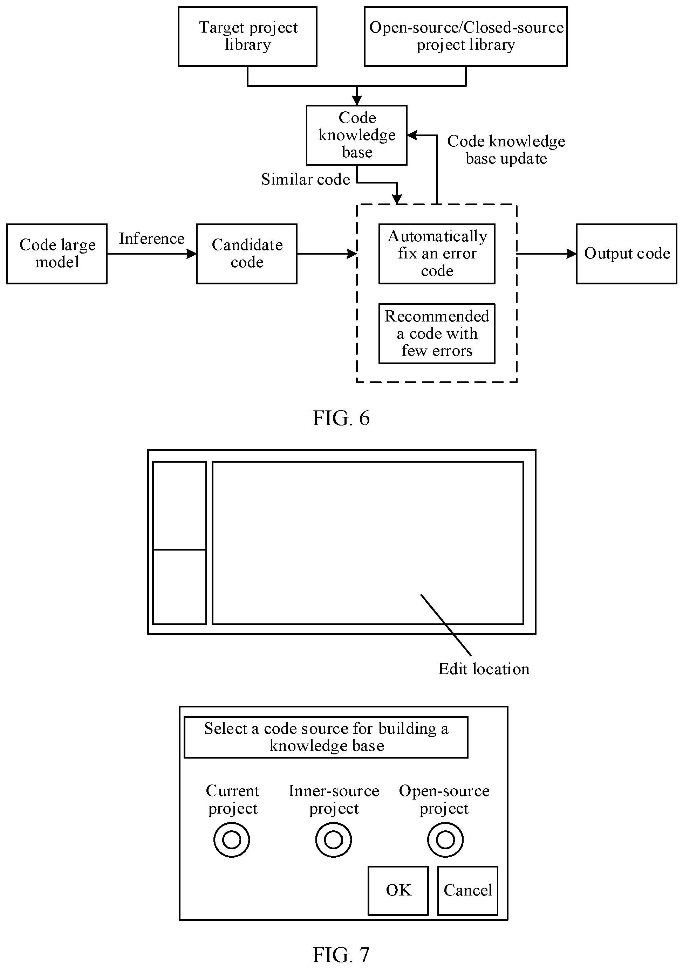

A process in which the processing device obtains the original code and the build information is not limited in this embodiment of this application. Refer to FIG. 6. The processing device may access any one of a target project library, an open-source project library, or a closed-source project library, use a project code in the accessed project library as the original code, and use a related document of the project library as the build information. The build information is used to describe related configuration when the project is built, including but not limited to a project name, a project function, a project format, and the like. The related document includes a code example of the project code, namely, a distributed representation of the code, and is used to describe the build information of the project. In a possible case, for the candidate code applied to the target project, the target project has some code implementations. For example, the user writes a code signature, a comment, and the like of the target project based on the development requirement of the target project, and store the written code signature, comment, and the like in the target project library as the project code of the target project. The open-source project library is a code library that stores a large quantity of project codes and does not restrict visitors. The closed-source project library may be referred to as an internal inner-source project library in some cases, and is a non-open-source project library that has an access permission based on a service requirement. The inner-source project library may be an internal code library of a company, and is configured to store project codes developed by the company over the years.

The processing device may randomly select a project library to collect original codes, or may determine, based on interaction with the user, a project library that needs to be accessed. FIG. 7 is an example diagram of a page display according to an embodiment of this application. Refer to FIG. 7. When the processing device is the terminal of the user, the terminal displays an initial page shown in an upper figure in FIG. 7. The user may perform right-clicking at an edit location to switch the page from the upper figure in FIG. 7 to a lower figure in FIG. 7, and select a code source for building a knowledge base. When the user triggers a select control of a current project, the terminal selects a project code of the target project as an original code, and uses a project document of the target project as build information. When the user triggers a select control of an inner-source project, the terminal obtains a project code in the inner-source project as an original code, and uses a related document of the inner-source project as build information. When the user triggers a select control of an open-source project, the terminal selects a project code in the open-source project as an original code, and uses a related document of the open-source project as build information. In FIG. 7, two concentric circles are used as a select control, and the user may select to trigger one or more controls based on a programming requirement, and click an OK button after triggering. In this way, the terminal obtains the original code and the build information. FIG. 7 further includes a cancel control, and the cancel control is used to cancel selection of the code source and exit the selection page.

In a possible implementation, the processing device may alternatively access a function code library, and the function code library includes implementation codes of multiple functions and components, for example, implementation codes of image processing functions such as image filtering, cropping, and rotation. The implementation code in the function code library can be reused during project development. Therefore, when a developed project involves a related function and component, the implementation code in the function code library can be directly invoked, to avoid repeated code writing. In a possible case, the function code library may be referred to as a third-party library. The third-party library provides the implementation code by using a computer file format (JAR), a binary archive file (android archive, AAR) of an Android library project, or a virtual machine-based build tool (Gradle). Optionally, the third-party library further includes a dynamic link library and a static link library. The processing device may access the function code library, obtain the implementation code in the function code library, and use the obtained implementation code as the original code used to build the code knowledge base. In addition, the processing device may further obtain code information of the function code library as project build information of the code. The code information describes how to invoke the code in the function code library.

Similar to the foregoing project code selection process, the processing device may select one or both of the project library or the function code library to obtain original codes and build information of the original codes. Then, code features of the original codes are determined based on the original codes and the build information of the original codes. For example, an abstract syntax tree (abstract syntax tree, AST) of the collected original codes is analyzed, and one node on the tree represents one structure that appears in the original codes, to obtain structure features of the original codes. In addition, the processing device may further extract a package name, a category attribute, a type declaration, and a definition in the build information as description features of the original codes, to obtain the code features including the description features and the structure features.

In a possible case, the processing device further obtains a usage-impact relationship between the original codes. The usage-impact relationship is, for example, an invoking relationship in which a code A needs to invoke a code B, or a restriction relationship in which a code C conflicts with a code D and the code D cannot be loaded on a basis of loading the code C. The processing device may analyze the build information of the original codes, to determine the usage-impact relationship between the original codes, and after determining the usage-impact relationship, build a knowledge graph of the original codes based on the code features and the usage-impact relationship. The knowledge graph is used to structurally describe a concept of the original code in the physical world and a correspondence between the original codes, to obtain a triplet in a composition form <code, relationship, code>. For example, the processing device may build a structure like a control flow graph (control flow graph, CFG) of the original codes based on the code features of the original codes, and establishes an edge based on the usage-impact relationship, to obtain the knowledge graph of the original codes.

After obtaining the knowledge graph that may represent the correspondence between the original codes, the processing device may build the code knowledge base based on the knowledge graph. For example, the CFG is connected to an internal control flow graph in a function/method in the original codes, and a definition of the method/function, a definition of a type, a definition of a global variable, and the like in the original codes are determined, to obtain global graph information. Then, training is performed based on the global graph information and the connected control flow graph by using the knowledge graph algorithm, to obtain representations of nodes and edges. One node represents one original code, and one edge represents a correspondence between original codes. The representations are used to measure similarity between the nodes. The nodes and the edges are stored based on the representations, to store the multiple original codes based on the correspondence.

Regardless of a manner in which the processing device obtains the code knowledge base, the processing device may perform retrieval in the code knowledge base based on the to-be-fixed candidate code. For example, the processing device extracts a method name, a parameter list, and a type of the to-be-fixed candidate code, extracts an associated code context of the to-be-fixed candidate code, builds a code representation based on the extracted associated code context, method name, parameter list, type, and the like, and performs retrieval in the code knowledge base based on the code representation. After a representation of the similar code is retrieved, the retrieved representation is restored to a code, namely, the reference code. In some cases, the reference code retrieved in the code knowledge base may be referred to as a similar code retrieved in the code knowledge base, as shown in FIG. 6.

The reference code has a structure similar to that of the to-be-fixed candidate code, and can provide a function similar to that of the to-be-fixed candidate code. For example, the function of the to-be-fixed candidate code is to invoke the website A to search for a keyword A and display a search page, and the function of the reference code is to invoke the website A to search for a keyword B and display a search page. Therefore, as shown in FIG. 6, the to-be-fixed candidate code may be fixed based on the reference code, to automatically fix an erroneous code. The fixing process is, for example, matching the reference code with the to-be-fixed candidate code, and selecting, based on the matching result, the parameter from the reference code to replace the erroneous parameter included in the to-be-fixed candidate code, to obtain the fixed candidate code. For example, the processing device matches a structure and a variable of the reference code with those of the to-be-fixed candidate code, to determine a parameter that is included in the reference code and that corresponds to a parameter that needs to be fixed in the to-be-fixed candidate code, and replaces the parameter that needs to be fixed and that is included in the to-be-fixed candidate code with the corresponding parameter in the reference code. The foregoing matching process may be performed based on a minimum editing distance (minimum edit distance, MED) or based on context similarity.

The replacement may refer to one-to-one replacement. For example, the erroneous parameter in the to-be-fixed candidate code is a parameter A, the parameter corresponding to the parameter A in the reference code is a parameter B, and the parameter A is replaced with the parameter B. Alternatively, the replacement may refer to many-to-one replacement. In this case, the replacement may be referred to as adding a corresponding parameter in the reference code to the to-be-fixed candidate code. For example, as shown in FIG. 3(3), a variable type of a to-be-fixed candidate code is incorrect, and the processing device supplements a parameter to the to-be-fixed candidate code, to fix the variable type. The supplemented parameter is a parameter marked by using a rectangular box in a recommended fixed code. Alternatively, the replacement may refer to one-to-many replacement. To be specific, the erroneous parameter in the to-be-fixed candidate code does not have a corresponding parameter in the reference code. However, because the reference code may still run normally when no erroneous parameter exists, the processing device determines that the erroneous parameter may be deleted. For example, it is determined, based on the matching result of the reference code and the to-be-fixed candidate code, that a duplicate code exists in the reference code, and the processing device deletes the duplicate code, to fix the candidate code.

After fixing the candidate code to obtain the fixed candidate code, the processing device may recommend the fixed candidate code and another unfixed candidate code as a code generation result. For example, if the code generation information is input by the user, the processing device may return the code to the user, for example, display the fixed candidate code and the another unfixed candidate code on the terminal of the user, to recommend the code generation result to the user. Regardless of whether the processing device controls, via the communication connection, the terminal to return the code to the user, or the processing device, serving as the terminal of the user, returns the code, the terminal recommends the code in a similar process. The following temporarily describes a process of interaction between the processing device and the user by using an example in which the processing device is the terminal operated by the user.

Optionally, in a process of displaying a code generation result including multiple candidate codes, the terminal sorts the multiple candidate codes. For example, as shown in FIG. 5, the terminal determines whether the fixed candidate code has an error that needs to be automatically fixed. If the error exists, the foregoing fixing process of the candidate code is repeatedly performed. If the error does not exist, the fixed candidate code and another candidate code in the given code inference result are displayed as a code generation result. The given code inference result is the at least one candidate code generated in the foregoing embodiment. The terminal adds the code generation result to a candidate code list, extracts a code feature of a code included in the code generation result, performs retrieval in the code knowledge base based on the code feature to obtain similarity between each code and an original code in the code knowledge base, and sorts the codes based on the similarity of the codes. Because the original code in the code knowledge base is a correct code, higher similarity between the original code in the code knowledge base and the code in the code generation result indicates that the code is closer to the correct the original code, that is, accuracy is higher. After performing preliminary sorting based on the accuracy by using the similarity, the terminal further determines whether the code has an error, and further adjusts the sorting based on a quantity of errors of each code. For example, a code with fewer errors is displayed in a higher order on the terminal, and the code generation result is returned through sorting, so that an effect of recommending a code with few errors after the candidate code is inferred by using the code large model, as shown in FIG. 6.

For example, in a process of displaying the code included in the code generation result, the terminal may further identify the fixed candidate code. For example, the terminal determines a code fixing location corresponding to the fixed candidate code, and identifies the code fixing location; and provides the identified fixed candidate code and an unmodified candidate code. The code fixing location refers to parameters where changes occur, for example, contexts of the replaced parameter, the supplemented parameter, or the deleted parameter in the foregoing embodiment. A process of identifying the code fixing location is not limited in this embodiment of this application. The code fixing location may be highlighted, or the code fixing location may be underlined or bold.

In addition, the terminal may identify the fixed candidate code on a code display page including the multiple codes, or may identify the fixed candidate code on a modification page of the fixed candidate code. For example, after obtaining the multiple codes, the user determines that the fixed candidate code needs to be modified, and clicks, based on a modification requirement, an error control of the fixed candidate code, where the error control is, for example, "×" in FIG. 3(2). Based on the click of the error control, the terminal expands a modification page shown in FIG. 3(3), and highlights the code fixing location in a process of displaying the modification page. A color of the highlighted selection may be green, yellow, or any bright color different from the page. The code fixing location is identified, so that the user quickly learns of a fixing status of the fixed candidate code. Multiple interaction controls are provided in FIG. 3(2). In addition to the error control in the foregoing embodiment, a correct control and an accept (Accept) control are further included. When the user is satisfied with the displayed code, the accept (Accept) control is triggered. When the user determines that the displayed code is correct, the correct control is triggered. The correct control is, for example, "√" in FIG. 3(2).

After the terminal determines, by triggering the error control in the interaction controls, a code that needs to be fixed for the user, the terminal may provide an error fixing method of the code. For example, the code that needs to be fixed is the fixed candidate code. In a possible implementation, the terminal obtains at least one error fixing method corresponding to the fixed candidate code; and provides the at least one error fixing method. The at least one error fixing method is used to assist in correcting the fixed candidate code. For example, the terminal determines, based on a correspondence between the error type of the candidate code before the fixing and the error fixing method, at least one error fixing method for fixing the candidate code as the at least one error fixing method corresponding to the fixed candidate code. For example, the error type is the undefined parameter. The error fixing method may be changing the parameter, redefining the parameter, or the like. Because the error fixing method corresponding to the fixed candidate code is the fixing method of the candidate code before the fixing, when the user needs to modify the fixed candidate code, it indicates that the user is not satisfied with the current fixing method of the candidate code, and another fixing method needs to be used to correct the candidate code before the fixing. Therefore, the terminal may selectively provide an error fixing method used by the fixed candidate code in the at least one error fixing method, that is, the at least one error fixing method may include the error fixing method used by the fixed candidate code, or may not include the error fixing method used by the fixed candidate code. This is not limited in this embodiment of this application.

After the terminal displays the error fixing method, the user may perform fixing based on the error fixing method displayed by the terminal, or may fix the displayed code based on experience. Refer to FIG. 3(3). The modification page displayed by the terminal includes an erroneous code that needs to be fixed and a similar code in the code knowledge base, and provides a drop-down list for the user to select an error cause. After selecting the error cause, the user inputs a manually fixed result into a code input box of the "recommended fixed code". Similar to the process of displaying the fixed candidate code in the foregoing embodiment, the terminal may also identify a fixing location in the fixed code input by the user, so that the user can quickly determine a modified location. This helps the user check modification of the code.

In a possible implementation, after inputting a modified code, the user may send the modified code to the terminal. For example, the user triggers an update control in FIG. 3(3) to upload the modified code to the terminal, and the terminal obtains the modified code returned by the user. In a possible case, the terminal may extract a modification feature of the modified code, and update a reference code based on the extracted modification feature. The reference code is a code used in a process of fixing the candidate code to obtain the fixed candidate code. The modification feature may be a structure feature or a description feature of a modification location in the modified code, for example, a parameter name and a parameter type. The terminal updates, based on the modification feature, the reference code stored in the code knowledge base, to update the code knowledge base. For a case in which the terminal further returns the error fixing method, the terminal may also update, based on the modification feature, the error fixing method corresponding to the error type.

The foregoing process of updating the reference code may be performed after the fixed candidate code is recommended. For example, as shown in FIG. 5, after checking the fixed candidate code, the user, as the user, corrects the candidate code based on supplementary data. The terminal updates the code knowledge base based on the modified code fed back by the user, and updates, based on the error fixing method fed back by the user, the error fixing method corresponding to the error type. Optionally, the foregoing process of updating the code based on the modified code may alternatively be performed before the to-be-fixed candidate code is fixed. For the case in which the erroneous parameter included in the to-be-fixed candidate code is fixed based on the reference code in the foregoing embodiment, the terminal may obtain a modified code obtained by modifying a recommended first code, where the first code is obtained by fixing a second code before the recommendation; and extract a modification feature of the modified code, and update the second code based on the extracted modification feature, to obtain the reference code. The first code is a code displayed by the terminal to the user, the modified code is a code obtained by modifying the first code by the user, and the second code is an original code that is similar to the first code before the modification and that is stored in the code knowledge base. After obtaining the modified code of the user, the terminal updates, based on the modified code, the second code stored in the code knowledge base, to obtain the reference code.

In addition to returning the updated modified code to the terminal, the user may further trigger a page exit control to switch the page from the modification page to the display page of the multiple codes. The modification page further includes the page exit control, which is used to trigger the terminal to switch from the modification page in FIG. 3(3) to the display page in FIG. 3(2). The page exit control may be a Cancel button and an OK button in FIG. 3(3). The OK button means saving the modification of the displayed code and closing the page, and the Cancel button means abandoning the modification of the displayed code and closing the page.

In conclusion, according to the code recommendation method provided in this embodiment of this application, after generating the candidate code, the processing device automatically fixes the erroneous code in the candidate code, to provide the fixed candidate code and the unfixed candidate code that is different from the to-be-fixed candidate code. This improves the accuracy of the generated code. In addition, based on the interaction with the user, the code knowledge base used in the code fixing process is automatically updated based on the modified code returned by the user, to improve a fixing effect based on the updated code knowledge base. The code knowledge base including the large quantity of the original codes is built, expanding a code retrieval scale. A search scope is extended to another project other than the target project, a matching probability of the similar code is increased, and a success rate of code fixing is improved.

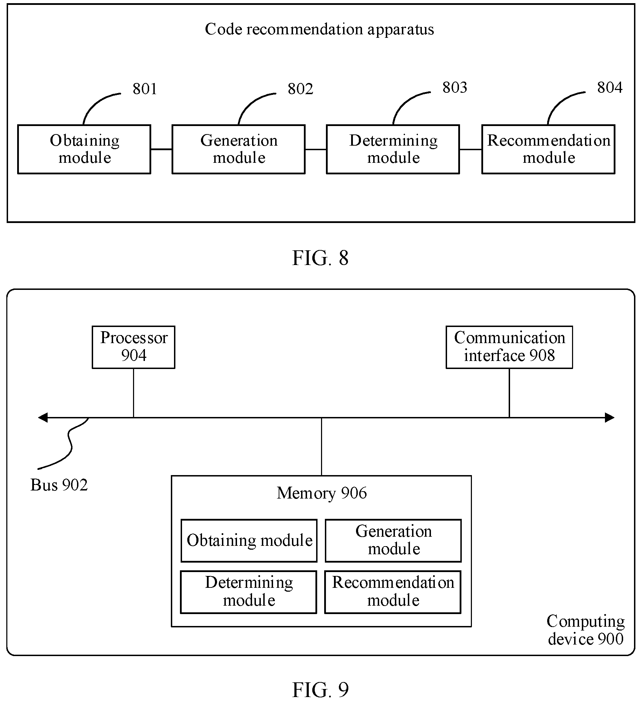

The foregoing describes the code recommendation method in embodiments of this application. Corresponding to the foregoing method, an embodiment of this application further provides a code recommendation apparatus. FIG. 8 is a diagram of a structure of a code recommendation apparatus according to an embodiment of this application. Based on the following multiple modules shown in FIG. 8, the code recommendation apparatus shown in FIG. 8 can perform all or a part of the operations shown in FIG. 2. It should be understood that the apparatus may include more additional modules than the shown modules or a part of the shown modules may be omitted. This is not limited in embodiments of this application. As shown in FIG. 8, the apparatus includes:
an obtaining module 801, configured to obtain code generation information, where the code generation information is used to describe a programming task of a code;
a generation module 802, configured to generate at least one candidate code based on the code generation information, where the at least one candidate code meets the programming task described in the code generation information;
a determining module 803, configured to determine a to-be-fixed candidate code from the at least one candidate code, where the to-be-fixed candidate code includes an erroneous parameter, and the erroneous parameter does not meet at least one of a syntax constraint or a semantic constraint of a programming language corresponding to the programming task; and
a recommendation module 804, configured to: fix the erroneous parameter included in the to-be-fixed candidate code, to obtain a fixed candidate code, and recommend a code generation result, where the code generation result includes the fixed candidate code and an unfixed candidate code in at least one candidate code, and the unfixed candidate code is different from the to-be-fixed candidate code.

In a possible implementation, the determining module 803 is configured to: detect each candidate code in the at least one candidate code, to obtain a detection result for each candidate code; when a detection result for any candidate code in the at least one candidate code indicates that the any candidate code has an error, determine an error type of the any candidate code, to obtain error types of respective candidate codes having errors; and match the error types of the respective candidate codes having errors with reference types, and determine, based on matching results of the respective candidate codes, the to-be-fixed candidate code from the candidate codes having errors, where the reference type indicates an error type that is supported for fixing.

In a possible implementation, the determining module 803 is configured to perform at least one of the following: for any candidate code, performing syntax parsing on the any candidate code, and determining, based on a parsing result, whether the any candidate code has a syntax error; or running the any candidate code in a compilation environment of the any candidate code, and determining, based on a running result, whether the any candidate code has a running error.

In a possible implementation, the determining module 803 is configured to: for any candidate code having an error, when an error type of the any candidate code successfully matches the reference type, determine, based on the error type of the any candidate code, a fixing method corresponding to the any candidate code; and when the fixing method of the any candidate code meets a fixing condition, determine the any candidate code as the to-be-fixed candidate code.

In a possible implementation, the reference type includes at least one of an undefined parameter, a code type error, or invoking an undefined method.

In a possible implementation, the recommendation module 804 is configured to: obtain a reference code corresponding to the to-be-fixed candidate code, where code similarity between the reference code and the to-be-fixed candidate code is greater than a similarity threshold; and match the reference code with the to-be-fixed candidate code, and select, based on a matching result, a parameter from the reference code to replace the erroneous parameter included in the to-be-fixed candidate code, to obtain the fixed candidate code.

In a possible implementation, the recommendation module 804 is configured to: obtain a code knowledge base, where the code knowledge base includes multiple original codes; and retrieve, based on the to-be-fixed candidate code, the reference code from the multiple original codes included in the code knowledge base.

In a possible implementation, the recommendation module 804 is configured to: obtain the multiple original codes and build information corresponding to the original codes; determine code features of the original codes based on the multiple original codes and the build information of the original codes; determine a correspondence between the original codes based on the code features of the original codes and a usage-impact relationship between the original codes; and build, based on the correspondence between the original codes, the code knowledge base including the multiple original codes.

In a possible implementation, the recommendation module 804 is configured to: determine a code fixing location corresponding to the fixed candidate code, and identify the code fixing location; and recommend the identified fixed candidate code and the unfixed candidate code.

In a possible implementation, the obtaining module 801 is further configured to obtain at least one error fixing method corresponding to the fixed candidate code; and the recommendation module 804 is further configured to recommend the at least one error fixing method corresponding to the fixed candidate code, where the at least one error fixing method is used to assist in correcting the to-be-fixed candidate code corresponding to the fixed candidate code.

In a possible implementation, the erroneous parameter is fixed based on the reference code; the obtaining module 801 is further configured to obtain a modified code obtained by modifying a recommended first code, where the first code is obtained by fixing a second code before recommendation; and the apparatus further includes an update module, configured to: extract a modification feature of the modified code, and update the second code based on the extracted modification feature to obtain the reference code.

After generating the candidate code, the apparatus automatically fixes a candidate code having an error in the candidate code. The fixed candidate code and the unfixed candidate code that is different from the to-be-fixed candidate code are provided. The to-be-fixed candidate code is fixed to a fixed candidate code with higher accuracy. This improves the accuracy of the generated code. Because the code used in the programming task is an accurate code, higher accuracy of a code indicates a higher probability of using the code in the programming task. A possibility of using the generated code in the programming task is further increased by improving the accuracy of the generated code.

The obtaining module 801, the generation module 802, the determining module 803, and the recommendation module 804 may all be implemented by software, or may be implemented by hardware. For example, the following uses the generation module 802 as an example to describe an implementation of the generation module 802. Similarly, for implementations of the obtaining module 801, the determining module 803, and the recommendation module 804, refer to the implementation of the generation module 802.

A module is used as an example of a software functional unit, and the generation module 802 may include a code run on a compute instance. The compute instance may include at least one of a physical host (computing device), a virtual machine, or a container. Further, there may be one or more compute instances. For example, the generation module 802 may include a code run on multiple hosts/virtual machines/containers. It should be noted that the multiple hosts/virtual machines/containers configured to run the code may be distributed in a same region (region), or may be distributed in different regions. Further, the multiple hosts/virtual machines/containers configured to run the code may be distributed in a same availability zone (availability zone, AZ), or may be distributed in different AZs. Each AZ includes one data center or multiple data centers that are geographically close to each other. One region may usually include multiple AZs.

Similarly, the multiple hosts/virtual machines/containers configured to run the code may be distributed on a same virtual private cloud (virtual private cloud, VPC), or may be distributed on multiple VPCs. Usually, one VPC is set in one region. A communication gateway needs to be set in each VPC for communication between two VPCs in a same region or between VPCs in different regions. Interconnection between the VPCs is implemented via the communication gateway.

A module is used as an example of a hardware functional unit, and the generation module 802 may include at least one computing device, for example, a server. Alternatively, the generation module 802 may be a device implemented by using an application-specific integrated circuit (application-specific integrated circuit, ASIC) or a programmable logic device (programmable logic device, PLD), or the like. The PLD may be implemented by using a complex programmable logic device (complex programmable logic device, CPLD), a field programmable gate array (field programmable gate array, FPGA), generic array logic (generic array logic, GAL), or any combination thereof.

Multiple computing devices included in the generation module 802 may be distributed in a same region, or may be distributed in different regions. The multiple computing devices included in the generation module 802 may be distributed in a same AZ, or may be distributed in different AZs. Similarly, the multiple computing devices included in the generation module 802 may be distributed in a same VPC, or may be distributed in multiple VPCs. The multiple computing devices may be any combination of computing devices such as a server, an ASIC, a PLD, a CPLD, an FPGA, and GAL.

It should be noted that, in another embodiment, the obtaining module 801, the generation module 802, the determining module 803, or the recommendation module 804 may be configured to perform any step in the code recommendation method. The step implemented by the obtaining module 801, the generation module 802, the determining module 803, or the recommendation module 804 may be specified as needed. The obtaining module 801, the generation module 802, the determining module 803, or the recommendation module 804 separately implements different steps in the code recommendation method to implement all functions of the code recommendation apparatus.

This application further provides a computing device 900. As shown in FIG. 9, the computing device 900 includes a bus 902, a processor 904, a memory 906, and a communication interface 908. The processor 904, the memory 906, and the communication interface 908 communicate with each other through the bus 902. The computing device 900 may be a server or a terminal device. It should be understood that quantities of processors and memories in the computing device 900 are not limited in this application.

The bus 902 may be a peripheral component interconnect (peripheral component interconnect, PCI) bus or an extended industry standard architecture (extended industry standard architecture, EISA) bus, or the like. Buses may be classified into an address bus, a data bus, a control bus, and the like. For ease of representation, only one line is used to represent the bus in FIG. 9, but this does not mean that there is only one bus or only one type of bus. The bus 902 may include a path for transferring information between parts (for example, the memory 906, the processor 904, and the communication interface 908) of the computing device 900.

The processor 904 may include any one or more of processors such as a central processing unit (central processing unit, CPU), a graphics processing unit (graphics processing unit, GPU), a micro processor (micro processor, MP), or a digital signal processor (digital signal processor, DSP).

The memory 906 may include a volatile memory (volatile memory), for example, a random access memory (random access memory, RAM). The processor 904 may further include a non-volatile memory (non-volatile memory), for example, a read-only memory (read-only memory, ROM), a flash memory, a hard disk drive (hard disk drive, HDD), or a solid-state drive (solid-state drive, SSD).

The memory 906 stores an executable program code. The processor 904 executes the executable program code to separately implement functions of the foregoing obtaining module, generation module, determining module, or recommendation module, to implement the code recommendation method. That is, the memory 906 stores instructions for performing the code recommendation method.

The communication interface 908 uses a transceiver module, for example but not limited to, a network interface card or a transceiver, to implement communication between the computing device 900 and another device or a communication network.

An embodiment of this application further provides a computing device cluster. The computing device cluster includes at least one computing device. The computing device may be a server, for example, a central server, an edge server, or a local server in a local data center. In some embodiments, the computing device may alternatively be a terminal device, for example, a desktop computer, a notebook computer, or a smartphone.

Optionally, for a structure of the at least one computing device included in the computing device cluster, refer to the computing device 900 shown in FIG. 9. A memory 906 in one or more computing devices 900 in the computing device cluster may store same instructions for performing the code recommendation method.

In some possible implementations, the memory 906 in the one or more computing devices 900 in the computing device cluster may alternatively store a part of the instructions for performing the code recommendation method. In other words, a combination of the one or more computing devices 900 may jointly execute the instructions for performing the code recommendation method.

It should be noted that memories 906 in different computing devices 900 in the computing device cluster may store different instructions respectively for performing some functions of the code recommendation apparatus. That is, the instructions stored in the memory 906 in different computing devices 900 may implement functions of one or more of the obtaining module, the generation module, the determining module, or the recommendation module.

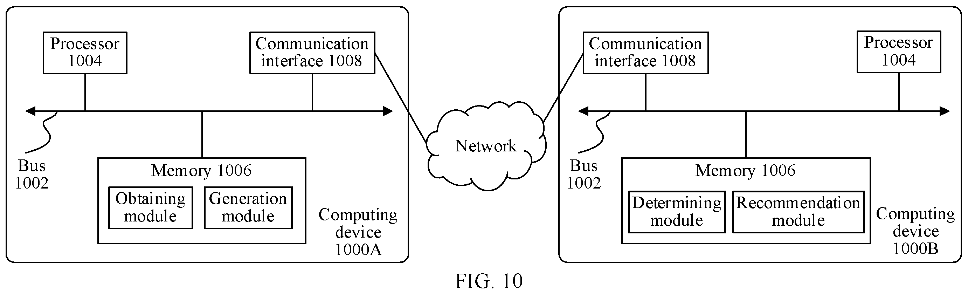

In some possible implementations, the one or more computing devices in the computing device cluster may be connected via a network. The network may be a wide area network, a local area network, or the like. FIG. 10 shows a possible implementation. As shown in FIG. 10, two computing devices 1000A and 1000B are connected to each other via a network. Specifically, each computing device is connected to the network through a communication interface in the computing device. In this possible implementation, the computing devices 1000A and 1000B include buses 1002, processors 1004, memories 1006, and communication interfaces 1008. The memory 1006 in the computing device 1000A stores instructions for performing functions of an obtaining module and a generation module. In addition, the memory 1006 in the computing device 1000B stores instructions for performing functions of a determining module and a recommendation module.

A connection manner between computing device clusters shown in FIG. 10 may be that, considering that a code generation result needs to be fed back in the code recommendation method provided in this application, it is considered that the functions implemented by the determining module and the recommendation module are performed by the computing device 1000A.

It should be understood that the functions of the computing device 1000A shown in FIG. 10 may alternatively be completed by multiple computing devices 1000. Similarly, functions of the computing device 1000B may alternatively be completed by multiple computing devices 1000.

An embodiment of this application further provides a communication apparatus. The apparatus includes a transceiver, a memory, and a processor. The transceiver, the memory, and the processor communicate with each other through an internal connection path. The memory is configured to store instructions. The processor is configured to execute the instructions stored in the memory, to control the transceiver to receive a signal and control the transceiver to send a signal. In addition, when the processor executes the instructions stored in the memory, the processor is caused to perform the code recommendation method.

It should be understood that the foregoing processor may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, any conventional processor, or the like. It should be noted that the processor may be a processor that supports an advanced reduced instruction set computer machines (advanced RISC machines, ARM) architecture.

Further, in an optional embodiment, the memory may include a read-only memory and a random access memory, and provide instructions and data for the processor. The memory may further include a non-volatile random access memory. For example, the memory may further store information about a device type.

The memory may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example rather than limitative description, many forms of RAMs are available, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

An embodiment of this application further provides a computer program (product) including instructions. The computer program (product) may be a software or a program (product) that includes instructions and that can be run on a computing device or be stored in any usable medium. When the computer program (product) is run on at least one computing device, the at least one computing device is caused to perform the code recommendation method.

An embodiment of this application further provides a computer-readable storage medium. The computer-readable storage medium may be any usable medium that can be stored by a computing device, or a data storage device, for example, a data center, including one or more usable media. The usable medium may be a magnetic medium (for example, a floppy disk, a hard disk, or a magnetic tape), an optical medium (for example, a DVD), a semiconductor medium (for example, a solid-state drive), or the like. The computer-readable storage medium includes instructions. The instructions instruct the computing device to perform the code recommendation method.

An embodiment of this application further provides a chip, including a processor, and configured to: invoke, from a memory, instructions stored in the memory and run the instructions, to cause a communication device on which the chip is mounted to perform any code recommendation method described above.

An embodiment of this application further provides another chip, including an input interface, an output interface, a processor, and a memory. The input interface, the output interface, the processor, and the memory are connected through an internal connection path. The processor is configured to execute a code in the memory. When the code is executed, the processor is configured to perform any code recommendation method described above.

All or a part of the foregoing embodiments may be implemented by using software, hardware, firmware, or any combination thereof. When the software is used for implementation, all or a part of the embodiments may be implemented in a form of a computer program product. The computer program product includes one or more computer instructions. When the computer program instructions are loaded and executed on a computer, the procedure or functions according to this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive Solid State Disk), or the like.

To clearly describe interchangeability of hardware and software, the steps and composition of embodiments have been generally described in the foregoing descriptions in terms of functions. Whether the functions are performed by the hardware or the software depends on particular applications and design constraint conditions of the technical solutions. Persons of ordinary skill in the art may use different methods to implement the described functions for each particular application, but it should not be considered that the implementation goes beyond the scope of this application.

Computer program codes used to implement the method in embodiments of this application may be written in one or more programming languages. The computer program codes may be provided for a processor of a general-purpose computer, a dedicated computer, or another programmable rule search apparatus, so that when the program codes are executed by the computer or the another programmable rule search apparatus, functions/operations specified in the flowcharts and/or block diagrams are implemented. The program codes may be executed entirely on a computer, executed partially on a computer, executed as a standalone software package, executed partially on a computer and partially on a remote computer, or executed entirely on a remote computer or a server.

In a context of embodiments of this application, a computer program code or related data may be carried in any appropriate carrier, so that the device, the apparatus, or the processor can perform various types of processing and operations described above. Examples of the carrier include a signal, a computer-readable medium, and the like. Examples of the signal may include an electrical signal, an optical signal, a radio signal, a voice signal, or other forms of propagated signals, such as a carrier wave and an infrared signal.

It may be clearly understood by persons skilled in the art that, for the purpose of convenient and brief description, for a detailed working process of the foregoing system, device, and module, refer to a corresponding process in the foregoing method embodiments. Details are not described herein again.

In the several embodiments provided in this application, it should be understood that the disclosed system, device, and method may be implemented in other manners. For example, the described device embodiments are merely examples. For example, the module division is merely logical function division and may be other division during actual implementation. For example, multiple modules or components may be combined or integrated into another system, or some features may be ignored or not performed. In addition, the displayed or discussed mutual couplings or direct couplings or communication connections may be indirect couplings or communication connections implemented through some interfaces, devices, or modules, or may be electrical, mechanical, or other forms of connection.

The modules described as separate parts may or may not be physically separate, and parts displayed as modules may or may not be physical modules, to be specific, may be located at one location, or may be distributed on multiple network modules. Some or all of the modules may be selected based on actual requirements to implement the objectives of the solutions of embodiments of this application.

In addition, functional modules in embodiments of this application may be integrated into one processing module, or each of the modules may exist alone physically, or two or more modules may be integrated into one module. The integrated module may be implemented in a form of hardware, or may be implemented in a form of a software functional module.

It should be noted that information (including but not limited to user equipment information, user personal information, and the like), data (including but not limited to data for analysis, data for storage, data for display, and the like), and signals in this application are all authorized by users or fully authorized by all parties, and collection, use, and processing of related data need to comply with related laws, regulations, and standards of related countries and regions. For example, the code generation information and the like in this application are all obtained in a case of full authorization.

The terms such as "first" and "second" in this application are used to distinguish between same or similar items with basically same roles and functions. It should be understood that there is no logical or temporal dependency between "first", "second", and "nth", and neither a quantity nor an execution sequence is limited. It should also be understood that although the following descriptions use terms such as "first" and "second" to describe various elements, these elements should not be limited by the terms. These terms are merely used to distinguish one element from another element. For example, without departing from the scope of the various examples, a first link may be referred to as a second link, and similarly, the second link may be referred to as the first link.

It should be further understood that sequence numbers of the processes do not mean execution sequences in embodiments of this application. The execution sequences of the processes should be determined based on functions and internal logic of the processes, and should not constitute any limitation on implementation processes of embodiments of this application.

In this application, the term "at least one" means one or more, and the term "multiple" in this application means two or more. For example, multiple second packets means two or more second packets. The terms "system" and "network" are often used interchangeably herein.

It should be understood that the terms used in the descriptions of the various examples herein are merely intended to describe specific examples and are not intended to constitute a limitation. As used in the descriptions of the various examples and in the appended claims, the singular forms "one" ("a" and "an") and "the" are intended to also include plural forms, unless otherwise explicitly indicated in the context.

It should be further understood that the term "include" (also referred to as "includes", "including", "comprises", and/or "comprising") used in this specification specifies presence of the stated features, integers, steps, operations, elements, and/or parts, with presence or addition of one or more other features, integers, steps, operations, elements, parts, and/or their components not excluded.

It should be further understood that, depending on the context, the phrase "if it is determined ..." or "if [the stated condition or event] is detected" may be interpreted to mean "when it is determined ..." or "in response to determining ..." or "when [the stated condition or event] is detected" or "in response to the detection of [the stated condition or event]".

It should be understood that determining B based on A does not mean that B is determined based only on A. B may alternatively be determined based on A and/or other information.

It should be further understood that "one embodiment", "an embodiment", and "a possible implementation" mentioned throughout the specification mean that a specific feature, structure, or characteristic related to the embodiment or the implementation is included in at least one embodiment of this application. Therefore, "in one embodiment", "in an embodiment", or "a possible implementation" appearing throughout the specification may not necessarily refer to a same embodiment. In addition, these specific features, structures, or characteristics may be combined in one or more embodiments in any proper manner.

Finally, it should be noted that the foregoing embodiments are merely used to describe the technical solutions of this application but not limit this application. Although this application is described in detail with reference to the foregoing embodiments, persons of ordinary skill in the art should understand that they may still modify the technical solutions described in the foregoing embodiments, or perform equivalent replacement on some technical features thereof. However, these modifications or replacements do not make the essence of the corresponding technical solutions depart from the protection scope of the technical solutions in embodiments of this application.

## Claims

1. A code recommendation method, wherein the method comprises:
Obtaining code generation information, wherein the code generation information is used to describe a programming task of a code;
generating at least one candidate code based on the code generation information, wherein the at least one candidate code meets the programming task described in the code generation information;
determining a to-be-fixed candidate code from the at least one candidate code, wherein the to-be-fixed candidate code comprises an erroneous parameter, and the erroneous parameter does not meet at least one of a syntax constraint or a semantic constraint of a programming language corresponding to the programming task; and
fixing the erroneous parameter comprised in the to-be-fixed candidate code to obtain a fixed candidate code, and recommending a code generation result, wherein the code generation result comprises the fixed candidate code and an unfixed candidate code in the at least one candidate code, and the unfixed candidate code is different from the to-be-fixed candidate code.

2. The method according to claim 1, wherein the determining the to-be-fixed candidate code from the at least one candidate code comprises:
detecting each candidate code in the at least one candidate code, to obtain a detection result for each candidate code;
when a detection result for any candidate code in the at least one candidate code indicates that the any candidate code has an error, determining an error type of the any candidate code, to obtain error types of respective candidate codes having errors; and
matching the error types of the respective candidate codes having errors with reference types, and determining, based on matching results of the respective candidate codes, the to-be-fixed candidate code from the candidate codes having errors, wherein the reference type indicates an error type that is supported for fixing.

3. The method according to claim 2, wherein the detecting each candidate code in the at least one candidate code comprises at least one of the following:
for any candidate code, performing syntax parsing on the any candidate code, and determining, based on a parsing result, whether the any candidate code has a syntax error; or
running the any candidate code in a compilation environment of the any candidate code, and determining, based on a running result, whether the any candidate code has a running error.

4. The method according to claim 2 or 3, wherein the determining, based on the matching result of the candidate code, the to-be-fixed candidate code from the candidate codes having errors comprises:
for any candidate code having an error, when an error type of the any candidate code successfully matches the reference type, determining, based on the error type of the any candidate code, a fixing method corresponding to the any candidate code; and
when the fixing method of the any candidate code meets a fixing condition, determining the any candidate code as the to-be-fixed candidate code.

5. The method according to any one of claims 2 to 4, wherein the reference type comprises at least one of an undefined parameter, a code type error, or invoking an undefined method.

6. The method according to any one of claims 1 to 5, wherein the fixing the erroneous parameter comprised in the to-be-fixed candidate code to obtain the fixed candidate code comprises:
obtaining a reference code corresponding to the to-be-fixed candidate code, wherein code similarity between the reference code and the to-be-fixed candidate code is greater than a similarity threshold; and
matching the reference code with the to-be-fixed candidate code, and selecting, based on a matching result, a parameter from the reference code to replace the erroneous parameter comprised in the to-be-fixed candidate code, to obtain the fixed candidate code.

7. The method according to claim 6, wherein the obtaining the reference code corresponding to the to-be-fixed candidate code comprises:
obtaining a code knowledge base, wherein the code knowledge base comprises multiple original codes; and
retrieving, based on the to-be-fixed candidate code, the reference code from the multiple original codes comprised in the code knowledge base.

8. The method according to claim 7, wherein the obtaining the code knowledge base comprises:
obtaining the multiple original codes and build information corresponding to the original codes;
determining code features of the original codes based on the multiple original codes and the build information of the original codes;
determining a correspondence between the original codes based on the code features of the original codes and a usage-impact relationship between the original codes; and
building, based on the correspondence between the original codes, the code knowledge base comprising the multiple original codes.

9. The method according to any one of claims 1 to 8, wherein the recommending the code generation result comprises:
determining a code fixing location corresponding to the fixed candidate code, and identifying the code fixing location; and
recommending the identified fixed candidate code and the unfixed candidate code.

10. The method according to any one of claims 1 to 9, wherein after the recommending the code generation result, the method further comprises:
obtaining at least one error fixing method corresponding to the fixed candidate code; and
recommending the at least one error fixing method corresponding to the fixed candidate code, wherein the at least one error fixing method is used to assist in correcting a to-be-fixed candidate code corresponding to the fixed candidate code.

11. The method according to any one of claims 1 to 10, wherein the erroneous parameter is fixed based on the reference code, and before the fixing the erroneous parameter comprised in the to-be-fixed candidate code, the method further comprises:
obtaining a modified code obtained by modifying a recommended first code, wherein the first code is obtained by fixing a second code before recommendation; and
extracting a modification feature of the modified code, and updating the second code based on the extracted modification feature to obtain the reference code.

12. A code recommendation apparatus, wherein the apparatus comprises:
an obtaining module, configured to obtain code generation information, wherein the code generation information is used to describe a programming task of a code;
a generation module, configured to generate at least one candidate code based on the code generation information, wherein the at least one candidate code meets the programming task described in the code generation information;
a determining module, configured to determine a to-be-fixed candidate code from the at least one candidate code, wherein the to-be-fixed candidate code comprises an erroneous parameter, and the erroneous parameter does not meet at least one of a syntax constraint or a semantic constraint of a programming language corresponding to the programming task; and
a recommendation module, configured to: fix the erroneous parameter comprised in the to-be-fixed candidate code to obtain a fixed candidate code, and recommend a code generation result, wherein the code generation result comprises the fixed candidate code and an unfixed candidate code in the at least one candidate code, and the unfixed candidate code is different from the to-be-fixed candidate code.

13. The apparatus according to claim 12, wherein the determining module is configured to: detect each candidate code in the at least one candidate code, to obtain a detection result for each candidate code; when a detection result for any candidate code in the at least one candidate code indicates that the any candidate code has an error, determine an error type of the any candidate code, to obtain error types of respective candidate codes having errors; and match the error types of the respective candidate codes having errors with reference types, and determine, based on matching results of the respective candidate codes, the to-be-fixed candidate code from the candidate codes having errors, wherein the reference type indicates an error type that is supported for fixing.

14. The apparatus according to claim 13, wherein the determining module is configured to perform at least one of the following: for any candidate code, performing syntax parsing on the any candidate code, and determining, based on a parsing result, whether the any candidate code has a syntax error; or running the any candidate code in a compilation environment of the any candidate code, and determining, based on a running result, whether the any candidate code has a running error.

15. The apparatus according to claim 13 or 14, wherein the determining module is configured to: for any candidate code having an error, when an error type of the any candidate code successfully matches the reference type, determine, based on the error type of the any candidate code, a fixing method corresponding to the any candidate code; and when the fixing method of the any candidate code meets a fixing condition, determine the any candidate code as the to-be-fixed candidate code.

16. The apparatus according to any one of claims 13 to 15, wherein the reference type comprises at least one of an undefined parameter, a code type error, or invoking an undefined method.

17. The apparatus according to any one of claims 12 to 16, wherein the recommendation module is configured to: obtain a reference code corresponding to the to-be-fixed candidate code, wherein code similarity between the reference code and the to-be-fixed candidate code is greater than a similarity threshold; and match the reference code with the to-be-fixed candidate code, and select, based on a matching result, a parameter from the reference code to replace the erroneous parameter comprised in the to-be-fixed candidate code, to obtain the fixed candidate code.

18. The apparatus according to claim 17, wherein the recommendation module is configured to: obtain a code knowledge base, wherein the code knowledge base comprises multiple original codes; and retrieve, based on the to-be-fixed candidate code, the reference code from the multiple original codes comprised in the code knowledge base.

19. The apparatus according to claim 18, wherein the recommendation module is configured to: obtain the multiple original codes and build information corresponding to the original codes; determine code features of the original codes based on the multiple original codes and the build information of the original codes; determine a correspondence between the original codes based on the code features of the original codes and a usage-impact relationship between the original codes; and build, based on the correspondence between the original codes, the code knowledge base comprising the multiple original codes.

20. The apparatus according to any one of claims 12 to 19, wherein the recommendation module is configured to: determine a code fixing location corresponding to the fixed candidate code, and identify the code fixing location; and recommend the identified fixed candidate code and the unfixed candidate code.

21. The apparatus according to any one of claims 12 to 20, wherein the obtaining module is further configured to obtain at least one error fixing method corresponding to the fixed candidate code; and the recommendation module is further configured to recommend the at least one error fixing method corresponding to the fixed candidate code, wherein the at least one error fixing method is used to assist in correcting the to-be-fixed candidate code corresponding to the fixed candidate code.

22. The apparatus according to any one of claims 12 to 21, wherein the erroneous parameter is fixed based on the reference code; the obtaining module is further configured to obtain a modified code obtained by modifying a recommended first code, wherein the first code is obtained by fixing a second code before recommendation; and the apparatus further comprises an update module, configured to: extract a modification feature of the modified code, and update the second code based on the extracted modification feature to obtain the reference code.

23. A computing device cluster, wherein the computing device cluster comprises at least one computing device, and each computing device comprises a processor and a memory; and the processor of the at least one computing device is configured to execute instructions stored in the memory of the at least one computing device, to cause the computing device cluster to perform the code recommendation method according to any one of claims 1 to 11.

24. A computer-readable storage medium, wherein the computer-readable storage medium comprises computer program instructions, and when the computer program instructions are executed by a computing device cluster, the computing device cluster performs the code recommendation method according to any one of claims 1 to 11.

25. A chip, wherein the chip comprises a processor, and the processor is configured to run program instructions or a code, to cause a device comprising the chip to perform the code recommendation method according to any one of claims 1 to 11.
